(19) Europäisches Patentamt
European Patent Office
Office européen des brevets

(11) **EP 2 813 864 A2**

(12) **EUROPEAN PATENT APPLICATION**

(43) Date of publication:
**17.12.2014 Bulletin 2014/51**

(51) Int Cl.:
**G01S 19/33** $^{(2010.01)}$     **G01S 19/42** $^{(2010.01)}$

(21) Application number: **14166288.2**

(22) Date of filing: **29.04.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **24.05.2013 CN 201310199019
20.03.2014 US 201414220703**

(71) Applicant: **O2 Micro, Inc.
Santa Clara, CA 95054 (US)**

(72) Inventors:
• **Gou, Juan**
**610041 Chengdu (CN)**
• **Zou, Jinghua**
**610041 Chengdu (CN)**
• **Zhang, Weihua**
**610041 Chengdu (CN)**

(74) Representative: **Lippert, Stachow & Partner
Patentanwälte
Postfach 30 02 08
51412 Bergisch Gladbach (DE)**

(54) **Receivers and methods for multi-mode navigation**

(57)     A receiver for a multi-mode navigation system includes a base band unit and a calculation unit. The base band unit is configured for allocating resources to positioning satellites in each of one or more navigation system, and tracking the positioning satellites with the allocated resources to obtain satellite information of each of the positioning satellites. The satellite information includes one or more of pseudo-ranges, position coordinates, velocity information, and frequency information of the positioning satellites. The calculation unit is configured for receiving the satellite information from the base band unit, evaluating the positioning satellites in each navigation system, and determining a positioning parameter of the receiver. Determination of the positioning parameter includes calculating a position and a velocity of the receiver based on the satellite information according to a least square algorithm.

FIG. 1

EP 2 813 864 A2

**Description**

RELATED APPLICATION

This Application claims priority to Patent Application Number 201310199019.9, filed on May 24, 2013 with State Intellectual Property Office of the P.R. China (SIPO), which is hereby incorporated by reference.

BACKGROUND

At present time, there are four sets of satellite navigation systems in the world: BeiDou (Compass) satellite navigation system, Global Positioning System (GPS), Global Navigation Satellite System (GLONASS) satellite navigation system, and Galileo satellite navigation system developed by China, United States, Russia, and Europe, respectively. The BeiDou satellite navigation system is self-developed by China and can work independently from other satellite navigation systems.

Conventionally, a receiver can only receive satellite signals from one single satellite navigation system to perform positioning or navigation. However, such conventional receiver has a relatively low positioning accuracy.

SUMMARY

The present disclosure describes a receiver for a multi-mode navigation system. The receiver includes a base band unit and a calculation unit. The base band unit is configured for allocating resources to positioning satellites in each of one or more navigation systems, and capturing and tracking the positioning satellites with the allocated resources to obtain satellite information of each of the positioning satellites, wherein the satellite information includes one or more of pseudo-ranges, position coordinates, velocity information, and frequency information of the positioning satellites. The calculation unit is configured for receiving the satellite information from the base band unit, evaluating the positioning satellites in each navigation system, and determining a positioning parameter of the receiver. Determination of the positioning parameter includes calculating a position and a velocity of the receiver based on the satellite information according to a least square algorithm.

In yet another embodiment, the present disclosure describes a method for navigation, the method includes: receiving and processing satellite navigation signals from at least one navigation system; allocating resources for detected positioning satellites; capturing and tracking the positioning satellites with allocated resources to obtain satellite information, wherein the satellite information includes one or more of pseudo-ranges, position coordinates, velocity information, and frequency information of the positioning satellites; evaluating the positioning satellites according to the satellite information; and determining a positioning parameter of the receiver. Determining the positioning parameter of the receiver includes calculating a position and a velocity of the receiver based on a least square algorithm.

Further, in the method, determining the positioning parameter of the receiver may comprise calculating a position and a velocity of the receiver based on a least square algorithm.

Further, the method may further comprise determining an observation equation for calculating the position based on the least square algorithm as following:

$$Z = HX + v$$

wherein X is a state vector, Z is an observation vector, H is an observation matrix system, v represents a noise vector of the observation vector, and wherein the state vector X is calculated according to the observation equation to obtain the positioning parameter of the receiver.

Further, in the method, the state vector and the observation vector for position calculation based on the least square algorithm may be:

$$X = [\Delta x_u, \Delta y_u, \Delta z_u, \Delta b_{u1}, \Delta b_{u2}, \dots, \Delta b_{uM}]^T$$

$$Z = [\Delta \rho_{11}, \Delta \rho_{12}, \dots, \Delta \rho_{1N_1}, \dots \Delta \rho_{M1}, \Delta \rho_{M2}, \dots, \Delta \rho_{MN_M}]^T$$

wherein $\Delta b_{ui}$ represents a bias between a displacement corresponding to a clock bias between the receiver and an $i^{th}$ satellite navigation system and an initial displacement, $\Delta\rho_{ij}$ represents a bias between a measured pseudo range of a $j^{th}$ satellite in the $i^{th}$ navigation system and an estimated pseudo range, M represents a number of navigation systems used for calculating the position, $N_i$ represents a number of satellites in the $i^{th}$ navigation system used for calculating the position, and $(\Delta x, \Delta y_u, \Delta z_u)$ represents a bias between a position coordinate of the receiver and an initial position coordinate.

Further, in the method, the observation matrix H may be a $((N_1+N_2+...N_M)*(3+M))$ matrix:

$$H = \begin{bmatrix} \alpha_{1x1} & \alpha_{1y1} & \alpha_{1z1} & 1 & 0 & ... & 0 \\ \alpha_{1x2} & \alpha_{1y2} & \alpha_{1z2} & 1 & 0 & ... & 0 \\ \vdots & \vdots & \vdots & \vdots & \vdots & \vdots & \vdots \\ \alpha_{1xN_1} & \alpha_{1yN_1} & \alpha_{1zN_1} & 1 & 0 & ... & 0 \\ \alpha_{2x1} & \alpha_{2y1} & \alpha_{2z1} & 0 & 1 & ... & 0 \\ \alpha_{2x2} & \alpha_{2y2} & \alpha_{2z2} & 0 & 1 & ... & 0 \\ \vdots & \vdots & \vdots & \vdots & \vdots & \vdots & \vdots \\ \alpha_{2xN_2} & \alpha_{2yN_2} & \alpha_{2zN_2} & 0 & 1 & ... & 0 \\ \vdots & \vdots & \vdots & \vdots & \vdots & \vdots & \vdots \\ \alpha_{Mx1} & \alpha_{My1} & \alpha_{Mz1} & 0 & 0 & ... & 1 \\ \alpha_{Mx2} & \alpha_{Mx2} & \alpha_{Mx2} & 0 & 0 & ... & 1 \\ \vdots & \vdots & \vdots & \vdots & \vdots & \vdots & 1 \\ \alpha_{MxN_M} & \alpha_{MyN_M} & \alpha_{MzN_M} & 0 & 0 & ... & 1 \end{bmatrix}$$

wherein $\alpha_{ixj} = (\hat{x}_u - x_{ij})/\hat{r}_{ij}$, $\alpha_{iyj} = (\hat{y}_u - y_{ij})/\hat{r}_{ij}$, $\alpha_{izj} = (\hat{z}_u - y_{ij})/\hat{r}_{ij}$, represent parameters of the $j^{th}$ satellite in the $i^{th}$ navigation system, $(\hat{x}_u, \hat{y}_u, \hat{z}_u)$ represents an initial coordinate of the receiver in earth-centered earth-fixed (ECEF) coordinate system, and $\hat{r}_{ij}$ represents an estimated distance between the $j^{th}$ satellite in the ith navigation system and the receiver.

Further, in the method, an estimation formula of the state vector X based on the least square algorithm for calculating the position may be:

$$\widehat{X} = (H^T H)^{-1} H^T Z$$

Further, in the method, an estimation formula of the state vector X based on a weighted least square algorithm for position calculating may be:

$$\widehat{X} = (H^T R^{-1} H)^{-1} H^T R^{-1} Z$$

wherein R is a covariance matrix of v, and indicates a noise of each observation value.

Further, in the method, the calculation unit may determine whether an estimated value X1 of the state vector X based on the least square algorithm converges to an allowable range, wherein if the estimated value X1 doesn't converge to the allowable range, the calculation unit may update the value of state vector X with a prior estimated value X1, and may estimate the value of the state vector X again, and wherein if the estimated value X1 converges to the allowable range, the calculation unit may obtain the positioning parameter of the receiver according to the estimated value X1.

Further, in the method, the calculation unit may determine whether an estimated value X1 of the state vector X based on the weighted least square algorithm converges to an allowable range, wherein if the estimated value X1 doesn't converge to the allowable range, the calculation unit may update the value of state vector X with a prior estimated value X1, and may estimate the value of the state vector X again, and wherein if the estimated value X1 converges to the allowable range, the calculation unit may obtain the position information of the receiver according to the estimated value X1.

Further, in the method, calculating the velocity of the receiver may further comprise:

determining an observation equation $d = Hg$ for calculating the velocity of the receiver, wherein g is a state vector, d is a observation vector, and H is an observation matrix;

calculating the state vector g according to the observation equation to obtain the velocity of the receiver.

Further, in the method, the observation vector d, the observation matrix H, and the state vector g may be:

$$
d = \begin{bmatrix} d_1 \\ d_2 \\ \cdots \\ d_T \end{bmatrix}, \quad
H = \begin{bmatrix} a_{11\_x} & a_{11\_y} & a_{11\_z} & 1 \\ a_{12\_x} & a_{12\_y} & a_{12\_z} & 1 \\ \cdots & \cdots & \cdots & 1 \\ a_{ij\_x} & a_{ij\_y} & a_{ij\_z} & 1 \end{bmatrix}, \quad
g = \begin{bmatrix} \dot{x}_u \\ \dot{y}_u \\ \dot{z}_u \\ -c\,\dot{t}_u \end{bmatrix}
$$

wherein $d_{ij} = v_{ij\_x} a_{ij\_x} + v_{ij\_y} a_{ij\_y} + v_{ij\_z} a_{ij\_z}$, T represents a number of satellites used for calculating the velocity, i represents $i^{th}$ satellite navigation system, j represents $j^{th}$ positioning satellite in the $i^{th}$ satellite navigation system, c represents velocity of light, $(v_{ij\_x}, v_{ij\_y}, v_{ij\_z})$ represents a velocity vector of the $j^{th}$ positioning satellite in the $i^{th}$ satellite navigation system, $(\dot{x}_u, \dot{y}_u, \dot{z}_u)$ represents the velocity of the receiver, $\dot{t}_u$ represents a timing variation rate of a clock in the receiver, $(a_{ij\_x}, a_{ij\_y}, a_{ij\_z})$ represents a direction vector of the $j^{th}$ positioning satellite in the $i^{th}$ satellite navigation system relative to the receiver, wherein $a_{ij\_x}=(x_{ij}-x_u)/r$, $a_{ij\_y}=(y_{ij}-y_u)/r$, $a_{ij\_z}=(z_{ij}-z_u)/r$, r represents a distance from the receiver to the $j^{th}$ positioning satellite in the $i^{th}$ satellite navigation system, $(x_{ij}, y_{ij}, z_{ij})$ represents a position coordinate of the $j^{th}$ positioning satellite in the $i^{th}$ satellite navigation system, and wherein $(x_u, y_u, z_u)$ represents a position coordinate of the receiver.

BRIEF DESCRIPTION OF THE DRAWINGS

Features and benefits of embodiments of the claimed subject matter will become apparent as the following detailed description proceeds, and upon reference to the drawings, wherein like numerals depict like parts. These exemplary embodiments are described in detail with reference to the drawings. These embodiments are non-limiting exemplary embodiments, in which like reference numerals represent similar structures throughout the several views of the drawings.

FIG. 1 is a block diagram illustrating an exemplary receiver, in accordance with one embodiment of the present teaching;

FIG. 2 is a flowchart illustrating a method for navigation, in accordance with one embodiment of the present teaching;

FIG. 3 is a flowchart illustrating a process in a method for navigation, in accordance with one embodiment of the present teaching; and

FIG. 4 is a flowchart illustrating an exemplary method for navigation, in accordance with one embodiment of the present teaching;

FIG.5 is a block diagram of a multi-mode navigation system for multiple navigation systems, in accordance with one embodiment of the present teaching;

FIG.6 is a flowchart illustrating a process implemented by a calculation unit in accordance with one embodiment of the present teaching;

FIG.7 is a flowchart illustrating a method for position calculation based on least square algorithm, in accordance with one embodiment of the present teaching;

FIG.8 is a flowchart illustrating a method for velocity calculation based on least square algorithm, in accordance with one embodiment of the present teaching.

DETAILED DESCRIPTION

Reference will now be made in detail to the embodiments of the present teaching. While the present teaching will be described in conjunction with these embodiments, it will be understood that they are not intended to limit the present teaching to these embodiments. On the contrary, the present teaching is intended to cover alternatives, modifications and equivalents, which may be included within the spirit and scope of the present teaching as defined by the appended claims.

Furthermore, in the following detailed description of the present teaching, numerous specific details are set forth in order to provide a thorough understanding of the present teaching. However, it will be recognized by one of ordinary skill in the art that the present teaching may be practiced without these specific details. In other instances, well known methods, procedures, components, and circuits have not been described in detail as not to unnecessarily obscure aspects of the present teaching.

The navigation systems in present teaching may include the Beidou (Compass) satellite navigation system, the Global Positioning System (GPS), the GLONASS satellite navigation system, the Galileo satellite navigation system, and/or any other satellite navigation systems presently available or developed in the future. Each satellite navigation system may include one or more satellites. For example, Beidou satellite navigation system includes 9 Beidou satellites, and will include 30 available satellites by 2020. In the present teaching, the satellites transmitting signals which can be received by a receiver are referred to as positioning satellites. The signals sent from the positioning satellites may be called satellite signals. For example, if the receiver can receive Beidou satellite signals from 6 Beidou satellites, these 6 Beidou satellites are called Beidou positioning satellites.

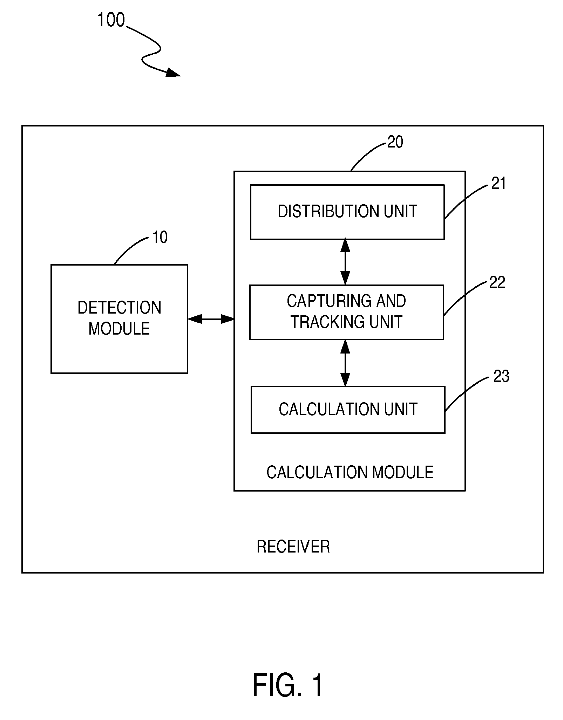

FIG. 1 illustrates a block diagram of a receiver 100, in accordance with one embodiment of the present teaching. In this embodiment, receiver 100 includes a detection module 10 and a calculation module 20. Detection module 10 may be configured for detecting and/or receiving one or more signals directed to navigation and determining one or more satellite navigation systems from where the one or more signals are sent. The one or more signals may be satellite signals sent from satellites in the one or more satellite navigation systems.

Detection module 10 may detect if the received satellite signals are sent from one or more satellite navigation systems. For example, detection module 10 may detect the Beidou satellite signals, the GPS satellite signals and the Galileo satellite signals according to an I-branch ordinary ranging code of the received satellite signals and may detect the GLONASS satellite signals according to a frequency of the received satellite signals.

Calculation module 20 may be coupled to detection module 10 and configured for obtaining or calculating navigation information at receiver 100, based on the one or more signals. The navigation information may be associated with the determined one or more navigation systems. Calculation module 20 may be further configured for calculating a displacement of receiver 100 corresponding to a clock bias between receiver 100 and a satellite navigation system, based on the received satellite signals. For example, calculation module 20 can calculate each displacement of receiver 100 corresponding to each clock bias between receiver 100 and each satellite navigation system, based on the received satellite signals. Calculation module 20, in this example, includes a allocation unit 21, a capturing and tracking unit 22, and a calculation unit 23.

Allocation unit 21 may be configured for allocating recourses for the positioning satellites in each detected satellite navigation system. Capturing and tracking unit 22 may be configured for capturing and tracking the positioning satellites with resources allocated by allocation unit 21 to obtain satellite information from the positioning satellites. The satellite information provided by the satellites may include one or more of pseudo range, position coordinates, velocity information and/or frequency information of the corresponding positioning satellites. Calculation unit 23 may be configured for calculating the navigation information of the receiver, and each displacement of receiver 100 corresponding to each clock bias between receiver 100 and each of the satellite navigation systems.

Calculation module 20 can further include an identification unit (not shown in FIG. 1). The identification unit may be configured for identifying redundant positioning satellites in each satellite navigation system according to the received satellite information. For example, the identification unit can identify the positioning satellites that provide the satellite information (e.g., pseudo range and Doppler measurement) with many errors as redundant satellites. The satellite signals from the identified redundant satellites may be abandoned and not used for calculating the position of the receiver. In one embodiment, the identification unit may identify the redundant satellites according to a method of Receiver Autonomous Integrity Monitoring (RAIM). The identification unit can also identify the redundant satellites according to the output parameters of each receiver loop, e.g., the variation of the carrier frequency, the variation of the pseudo range measurement, and the like, and/or any combination thereof.

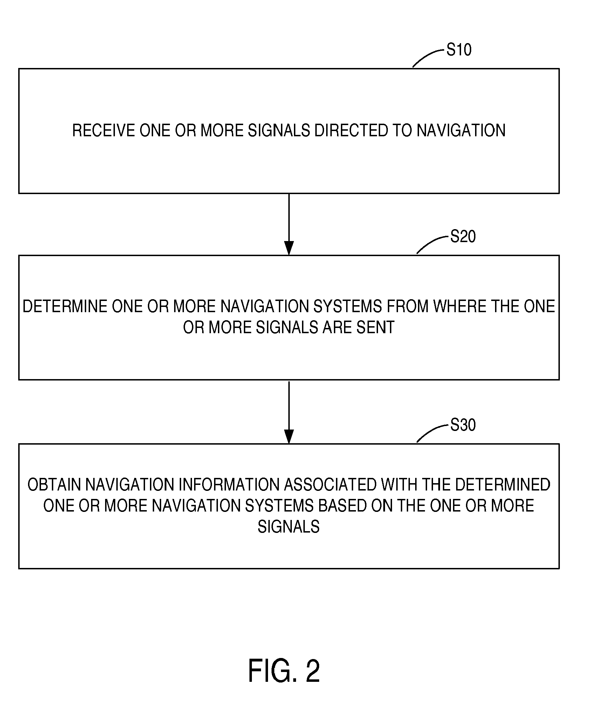

FIG. 2 illustrates a method for navigation, in accordance with one embodiment of the present teaching. FIG. 2 may be described in combination with FIG. 1. Although specific processes are disclosed in FIG. 2, such processes are examples. That is, the present teaching is well suited to perform variations of the processes recited in FIG. 2.

At S10, detection module 10 in receiver 100 may receive one or more signals directed to navigation. At S20, one or more navigation systems may be determined. The one or more signals may be sent from the one or more navigation systems. For example, the one or more navigation systems may be different satellite navigation systems. At S30, navigation information may be obtained based on the one or more signals. The navigation information may be associated with the determined one or more navigation systems. Calculation module 20 in receiver 100 may calculate the navigation information. Calculation module 20 may also calculate each displacement of receiver 100 corresponding to each clock bias between receiver 100 and each satellite navigation system according to the satellite information received from the detected satellite navigation systems, when the satellite signals are received from more than one satellite navigation systems.

The satellite information provided by the positioning satellites can include, but is not limited to, one or more of pseudo-range, position coordinates, frequency information, Doppler information, ephemeris information, velocity information of the positioning satellites, and the like, and/or any combination therefor. The navigation information of the receiver 100 may include the position coordinate information of the receiver 100 and the velocity information of the receiver 100.

For example, the Beidou satellite signals, the GPS satellite signals and Galileo satellite signals are based on Code Division Multiple Access (CDMA) technology, and the GLONASS satellite signals are based on Frequency Division Multiple Access (FDMA) technology. Thus, receiver 100 at S10 can detect if the received satellite signals are from one or more satellite signals. Receiver 100 may distinguish the GPS satellite signals, the Beidou satellite signals, and the Gallileo satellite signals from the received satellite signals by using I-branch ordinary ranging code, and distinguish the GLONASS satellite signals from the received satellite signals according to frequency.

In one embodiment, satellite signals based on CDMA technology can be expressed by an equation as the following:

$$S^j = AC^j D^j \cos(2\pi f\, t + \theta^j);\qquad(1)$$

wherein, A represents an amplitude of an ordinary ranging code modulated in I-branch, C represents the I-branch ordinary ranging code, D represents navigation message data in the I-branch, f represents the carrier frequency of the satellite signals, t represents a transmitting time of the satellite signals, j represents an identification (ID) of a satellite, $S^j$ represents a satellite signal transmitted from a satellite with an ID of j, and $\theta$ represents an initial carrier phase of each satellite signal. The value of $\theta$ can be different for each satellite. The above-mentioned parameters can be all known to the corresponding satellite. The parameters can be obtained at receiver 100 by capturing and tracking the satellite signals. The value of f in each satellite navigation system may be different. Because the Beidou satellite signals, the GPS satellite signals and the Galileo satellite signals are be based on CDMA technology, the transmitting frequencies of the three satellite navigation systems in the same signal segment may be the same. Since the GLONASS satellite signals is based on FDMA technology, the GLONASS satellite signals can be distinguished according to frequency.

A pseudo-random number (PRN) of each Beidou satellite, GPS satellite, and Galileo satellite may be unique. Therefore, a type of satellite can be determined based on the pseudo-random number sequence, i.e., the parameter C in equation (1). For receiver 100, the available satellite signals can be captured and identified by reestablishing the pseudo-random number sequence of the satellites.

For example, the method for establishing the PRN sequence can be obtained from an Interface Control Document (ICD) of each satellite navigation system. Therefore, receiver 100 may search for possible receiving frequency of the satellite signal and the PRN information. After receiving a satellite signal from a satellite, receiver 100 can obtain the navigation message data D in the I-branch and the initial carrier phase $\theta$ of the satellite signal. A baseband channel may establish a PRN sequence in accordance with the PRN sequence of the satellite. Receiver 100 may capture and track the satellite. If the satellite is captured and tracked successfully, the present satellite signal can be included in the input signals. In addition, when the established PRN sequence is in accordance with the PRN sequence of the captured and tracked satellite signals, a correlation peak appears with respect to the CDMA signals. For example, when the established PRN sequence is the same as the PRN sequence of the captured and tracked satellite signals, a correlation peak appears with respect to the CDMA signals. Thus, receiver 100 can detect if the satellite is captured successfully or not by detecting a correlation peak of the CDMA signals based on a capturing threshold.

The satellite can broadcast two kinds of ranging code, which are loaded on the I-branch and Q-branch of the satellite signals, respectively. For the Beidou satellite navigation system, for example, the I-branch of the satellite signals is the civilian ordinary ranging code, and the Q-branch of the satellite signals is professional accurate ranging code (for example, for military use), and receiver 100 can only receive the Q-branch after being authorized.

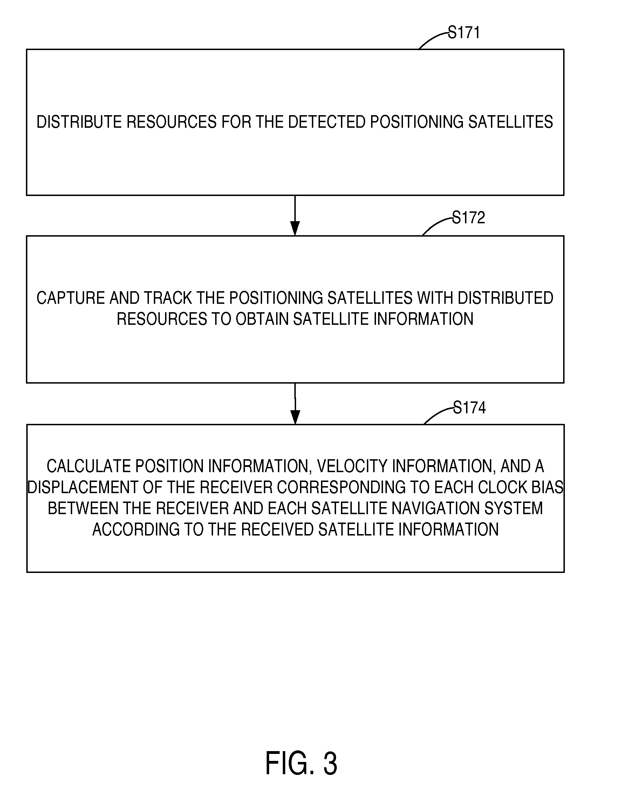

A detailed method for calculating position information of receiver 100 will be described below in combination with FIG. 3.

FIG. 3 illustrates a process for navigation based on multiple satellite navigation systems, in accordance with one embodiment of the present teaching. FIG. 3 is described in combination with FIG. 1 and FIG. 2. In one embodiment, the process in FIG. 3 may be included in S30 in FIG. 2.

Receiver 100 can allocate resources for the positioning satellites of the detected satellite navigation systems. For example, receiver 100 may allocate resources for the positioning satellites based on visibility, performance and an environment of the positioning satellites, at S171. The allocated resources may include, for example, capturing channel and tracking channel which are hardware resources, and CPU system resources which are software resources, etc.

The visibility of the satellite can be determined based on the positioning satellite ephemeris received by receiver 100. In other words, receiver 100 may detect if the positioning satellite is within the sight of receiver 100 or not. If the positioning satellite is within the sight of receiver 100, receiver 100 can allocate resources for the positioning satellite; otherwise, receiver 100 may not allocate resources or may reduce allocated resources for the positioning satellite. In addition, the coded formats of the satellite signals may be different. Moreover, the scanning time for the satellite signals with different formats may not be the same. If the scanning time is too long, the positioning efficiency may be decreased. Therefore, the scanning time may also be considered by receiver 100 when the resources are allocated.

Receiver 100 may capture and track the positioning satellites with allocated resources to obtain satellite information such as, for example, pseudo-range, position coordinate, velocity information and frequency information of each positioning satellite, and the like, and/or any combination thereof, from the positioning satellites, at S172. The measured pseudo-range of the positioning satellite may have an error. The number of the positioning satellites can be increased when the error is unacceptable, to weaken the effect of measurement errors caused by other satellites on the positioning result. Thus, the positioning accuracy can be improved. For example, in an embodiment, the number of the positioning satellites may be 12. The number of positioning satellites in various embodiments may be more or less.

At S174, receiver 100 may calculate the position information, the velocity information of receiver 100, and each displacement of receiver 100 corresponding to each clock bias between receiver 100 and each satellite navigation system according to the satellite information received at S172. Receiver 100 may calculate the position information and the displacement according to the equations as the following when the received satellite information is from k satellite navigation systems, where k is an integer and greater than 1:

$$\rho_{11} = \sqrt{(x_{11} - x_u)^2 + (y_{11} - y_u)^2 + (z_{11} - z_u)^2} + b_{u1}; \qquad (2\text{-}11)$$

$$\rho_{12} = \sqrt{(x_{12} - x_u)^2 + (y_{12} - y_u)^2 + (z_{12} - z_u)^2} + b_{u1}; \qquad (2\text{-}12)$$

......

$$\rho_{1m} = \sqrt{(x_{1m} - x_u)^2 + (y_{1m} - y_u)^2 + (z_{1m} - z_u)^2} + b_{u1}; \qquad (2\text{-}1m)$$

$$\rho_{21} = \sqrt{(x_{21} - x_u)^2 + (y_{21} - y_u)^2 + (z_{21} - z_u)^2} + b_{u2}; \qquad (2\text{-}21)$$

$$\rho_{22} = \sqrt{(x_{22} - x_u)^2 + (y_{22} - y_u)^2 + (z_{22} - z_u)^2} + b_{u2}; \qquad (2\text{-}22)$$

......

$$\rho_{2n} = \sqrt{(x_{2n} - x_u)^2 + (y_{2n} - y_u)^2 + (z_{2n} - z_u)^2} + b_{u2}; \qquad (2\text{-}2n)$$

$$\rho_{k1} = \sqrt{(x_{k1} - x_u)^2 + (y_{k1} - y_u)^2 + (z_{k1} - z_u)^2} + b_{uk}; \qquad (2\text{-}k1)$$

$$\rho_{k2} = \sqrt{(x_{k2} - x_u)^2 + (y_{k2} - y_u)^2 + (z_{k2} - z_u)^2} + b_{uk}; \qquad \text{(2-k2)}$$

$$\ldots\ldots$$

$$\rho_{kp} = \sqrt{(x_{kp} - x_u)^2 + (y_{kp} - y_u)^2 + (z_{kp} - z_u)^2} + b_{uk}. \qquad \text{(2-kp)}$$

$$\rho_{ij} = \sqrt{(x_{ij} - x_u)^2 + (y_{ij} - y_u)^2 + (z_{ij} - z_u)^2} + b_{ui}; \qquad \text{(3)}$$

$$\rho_1 = \sqrt{(x_1 - x_u)^2 + (y_1 - y_u)^2 + (z_1 - z_u)^2} + b_u; \qquad \text{(5-1)}$$

$$\rho_2 = \sqrt{(x_2 - x_u)^2 + (y_2 - y_u)^2 + (z_2 - z_u)^2} + b_u; \qquad \text{(5-2)}$$

$$\ldots\ldots$$

$$\rho_n = \sqrt{(x_n - x_u)^2 + (y_n - y_u)^2 + (z_n - z_u)^2} + b_u; \qquad \text{(5-m)}$$

Within the above equations, $\rho_{11}$~$\rho_{1m}$ represent the pseudo-ranges of the m positioning satellites from a first satellite navigation system, respectively; respectively; $\rho_{k1}$~$\rho_{kp}$ represent the pseudo-ranges of p positioning satellites from a $k^{th}$ satellite navigation system, respectively. For example, $\rho_{21}$~$\rho_{2n}$ represent the pseudo-ranges of n positioning satellites from a second satellite navigation system. The pseudo-ranges of the positioning satellites can be measured by a tracking loop of receiver 100. In the above equations, $(x_{1i}, y_{1i}, z_{1i})$ represents a position coordinate of $i^{th}$ positioning satellite from the first satellite navigation system, wherein $1 \leq i \leq m$; $(x_{2j}, y_{2j}, z_{2j})$ represents a position coordinate of $j^{th}$ positioning satellite from the second satellite navigation system, wherein $1 \leq j \leq n$; $(x_{ko}, y_{ko}, z_{ko})$ represents a position coordinate of $o^{th}$ positioning satellite from the kth satellite navigation system, wherein $1 \leq o \leq p$. In an embodiment where receiver 100 allocates resources to 12 positioning satellites, $1 \leq m+n+p \leq 12$. The position coordinate of each positioning satellite can be calculated according to the orbit parameters and positioning time of the corresponding positioning satellite. Within the above equations, $b_{u1}$ represents a displacement of receiver 100 corresponding to a clock bias between receiver 100 and the first satellite navigation system, i.e., the displacement corresponding to the clock bias between the local clock of receiver 100 and the clock of the first satellite navigation system; similarly, $b_{u2}$ represents a displacement of receiver 100 corresponding to a clock bias between receiver 100 and the second satellite navigation system; $b_{uk}$ represents a displacement of receiver 100 corresponding to a clock bias between receiver 100 and the $k^{th}$ satellite navigation system; and $(x_u, y_u, z_u)$ represents a position coordinate of receiver 100.

For example, when the received satellite information is from two satellite navigation systems, e.g., the Beidou satellite navigation system and the GPS system, for the above-mentioned equations, k is equal to 2, the equations (2-11)-(2-2n) can be used to calculate the position information of receiver 100. In such a situation, there are five unknowns, i.e., $x_u, y_u, z_u, b_{u1}$ and $b_{u2}$, so that at least five positioning satellites are be needed to perform the positioning calculation.

Comparing a first situation in which satellite information is received from two satellite navigation systems with a second situation in which the satellite information is received from one satellite navigation system, the first situation may include calculating an additional displacement of receiver 100 corresponding to a clock bias between receiver 100 and the additional satellite navigation system to correct the calculated navigation information. Thus, the positioning accuracy may be improved in the first situation, compared to the second situation. Similarly, if the received satellite information is from three or more satellite navigation systems, each displacement of receiver 100 corresponding to each clock bias between receiver 100 and each satellite navigation system may be utilized to calculate the position information of receiver 100. In addition, when the Beidou satellite navigation system, the GPS system, the GLONASS satellite navigation system and the Galileo satellite navigation system are all available for receiver 100, i.e., the received satellite information can be from one of the above-mentioned satellite navigation system or a combination thereof.

The above-mentioned equations (2-11)-(2-kp) can be simplified as:

$$\rho_{ij} = \sqrt{(x_{ij} - x_u)^2 + (y_{ij} - y_u)^2 + (z_{ij} - z_u)^2} + b_{ui} ; \qquad (3)$$

wherein, $\rho_{ij}$ represents a pseudo-range of the $j^{th}$ positioning satellite in the $i^{th}$ satellite navigation system; $b_{ui}$ represents a displacement of receiver 100 corresponding to a clock bias between receiver 100 and the $i^{th}$ satellite navigation system, i.e., the displacement corresponding to the clock bias between the local clock of receiver 100 and the clock of the $i^{th}$ satellite navigation system; $(x_{ij}, y_{ij}, z_{ij})$ represents a position coordinate of the $j^{th}$ positioning satellite in the $i^{th}$ satellite navigation system; and $(x_u, y_u, z_u)$ represents a position coordinate of receiver 100.

In some regions, the number of the available positioning satellites in the satellite navigation system may be relatively low. Thus, the positioning accuracy may be decreased if using satellite information from such a satellite navigation system with relatively few available positioning satellites. If receiver 100 can receive satellite signals from multiple satellite navigation systems, the number of the available positioning satellites can be increased. Thus, the positioning accuracy and velocity measurement accuracy can both be significantly improved.

The velocity information of receiver 100 can be calculated according to equation:

$$\frac{c(f_{ij} - f_{Tij})}{f_{Tij}} + v_{ij\_x}a_{ij\_x} + v_{ij\_y}a_{ij\_y} + v_{ij\_z}a_{ij\_z} = \dot{x}_u a_{ij\_x} + \dot{y}_u a_{ij\_y} + \dot{z}_u a_{ij\_z} - \frac{cf_{ij}\dot{t}_u}{f_{Tij}} ; (4)$$

wherein, $f_{ij}$ represents a receiving frequency of a satellite signal received by the receiver 100 from the $j^{th}$ positioning satellite in the $i^{th}$ satellite navigation system; $f_{Tij}$ represents a transmitting frequency of a satellite signal transmitted by the $j^{th}$ positioning satellite in the $i^{th}$ satellite navigation system. The transmitting frequencies of the satellite signals from the same satellite navigation system may be the same. For example, if the $i^{th}$ satellite navigation system includes three satellites, then, $f_{Ti1} = f_{Ti2} = f_{Ti3}$. For example, the transmitting frequency of the satellite signals B1 from the Beidou satellite can be 1.561098e9Hz, the transmitting frequency of the satellite signals L1 from the GPS satellite can be 1.57542e9Hz. In this embodiment, the receiving frequency and the transmitting frequency may be included in the frequency information. In equation (4), c represents velocity of light(c=2.99792458e8m/s); $(v_{ij\_x}, v_{ij\_y}, v_{ij\_z})$ represents a velocity vector of the $j^{th}$ positioning satellite in the $i^{th}$ satellite navigation system and can be calculated according to the positioning satellite ephemeris and a present time; $(a_{ij\_x}, a_{ij\_y}, a_{ij\_z})$ represents a direction vector of the $j^{th}$ positioning satellite in the $i^{th}$ satellite navigation system relative to receiver 100, and $a_{ij\_x}=(x_{ij}-x_u)/r$, $a_{ij\_y}=(y_{ij}-y_u)/r$, $a_{ij\_z}=(z_{ij}-z_u)/r$, wherein r represents a distance from receiver 100 to the jth positioning satellite in the $i^{th}$ satellite navigation system; $(x_{ij}, y_{ij}, z_{ij})$ represents a position coordinate of the $j^{th}$ positioning satellite in the $i^{th}$ satellite navigation system; $(x_u, y_u, z_u)$ represents a position coordinate of the receiver; $(\dot{x}_u, \dot{y}_u, \dot{z}_u)$ represents a velocity vector of the receiver; and $\dot{t}_u$ represents a timing variation rate of the clock in receiver 100, i.e., the rate of clock variation in receiver 100. It may be assumed that the clock in the satellite navigation system is stable, so that the timing variation rate can be related to the clock of receiver 100. The timing variation rate may be the first derivative of the clock bias between receiver 100 and the satellite navigation system.

After the position information and the velocity information of receiver 100 are calculated according to the above-mentioned equations, receiver 100 can generate a navigation path for navigation.

In one example, when there are relatively few errors in the measurements of the satellite pseudo-ranges and Doppler measurements, the accuracy of the positioning calculation can be increased by increasing the number of the positioning satellites. If the tracking quality of the satellites is poor because of, for example, measurement errors in the satellite pseudo-ranges and Doppler measurements in the satellite information provided by the satellites, the positioning accuracy may, in fact, decrease when the number of the positioning satellites is increased. Therefore, it may be necessary to identify the positioning satellites which provide the satellite information (e.g., pseudo range and Doppler measurement) with many errors.

Therefore, another process S173 (not shown in FIG. 3) can be performed after performing S172 and before performing S174. The identification unit in calculation module 20 of receiver 100 may identify the redundant positioning satellites in each satellite navigation system according to the received satellite information. The satellite signals from the identified redundant satellites may be abandoned and may not be used to calculate the position of receiver 100. For example, the identification unit can identify the positioning satellites that provide the satellite information (e.g., pseudo range and Doppler measurement) with many errors as the redundant satellites. In one embodiment, the redundant satellites can be identified according to a method of Receiver Autonomous Integrity Monitoring (RAIM). The identification unit can also identify the redundant satellites according to output parameters of each receiver loop, e.g., the variation of the carrier frequency, the variation of the pseudo range measurement, etc.

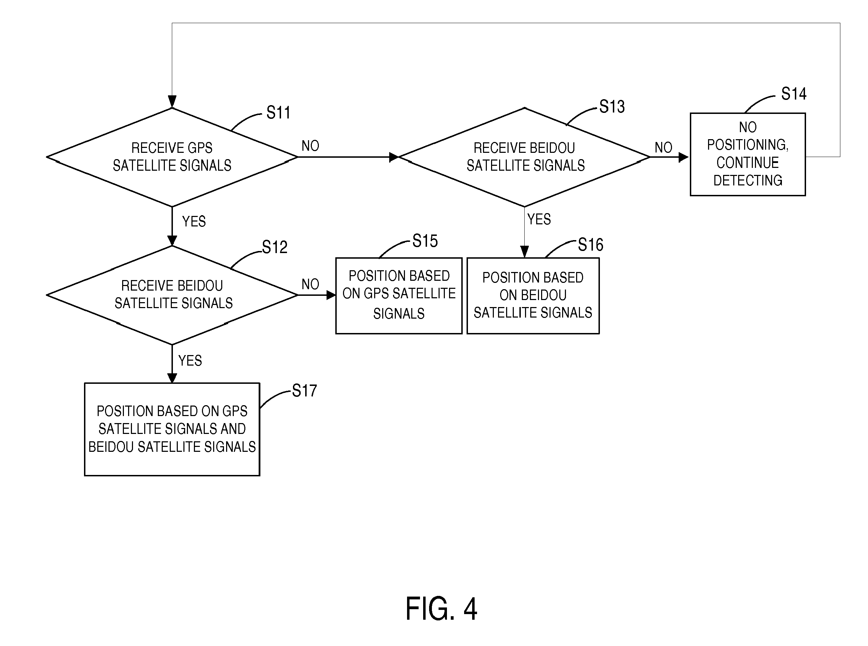

FIG. 4 illustrates an exemplary method for navigation, in accordance with one embodiment of the present teaching. Taking an example of BeiDou (Compass) satellite navigation system and Global Positioning System (GPS), FIG. 4 is described in combination with FIG. 1.

Detection module 10 in receiver 100 may receive the GPS satellite signals, at S11. If receiver 100 receives the GPS satellite signals, detection module 10 may further detect if receiver 100 receives the Beidou satellite signals, at S12. Otherwise, if receiver 100 does not receive the GPS satellite signals, detection module 10 in receiver 100 may still detect if the Beidou satellite signals are received, at S13. If no satellite signals are received from either GPS system or BeiDou system, at S14, no position may be performed and the detection module 10 may continue detecting satellite signals, i.e., moving back to S11 again.

As the Beidou satellite signals and the GPS satellite signals are based on CDMA technology, receiver 100 can distinguish the GPS satellite signals and the Beidou satellites from the received satellite signals by using I-branch ordinary ranging code at S11, S12, and S13, respectively.

If receiver 100 is detected to receive the GPS satellite signals, but not the Beidou satellite signals, receiver 100 can perform positioning in a single mode based on the GPS satellite signals, at S15. If receiver 100 does not receive the GPS satellite signals, but receives the Beidou satellite signals, receiver 100 may perform positioning in a single mode based on the Beidou satellite signals, at S16.

At S16 for example, when receiver 100 receives the Beidou satellite signals, the position information of receiver 100 and the displacement of receiver 100 corresponding to a clock bias between receiver 100 and the Beidou satellite navigation system can be calculated according to the equations (5-1)-(5-m) as the following:

$$\rho_1 = \sqrt{(x_1 - x_u)^2 + (y_1 - y_u)^2 + (z_1 - z_u)^2} + b_u \ ; \qquad (5\text{-}1)$$

$$\rho_2 = \sqrt{(x_2 - x_u)^2 + (y_2 - y_u)^2 + (z_2 - z_u)^2} + b_u \ ; \qquad (5\text{-}2)$$

······

$$\rho_n = \sqrt{(x_n - x_u)^2 + (y_n - y_u)^2 + (z_n - z_u)^2} + b_u \ ; \qquad (5\text{-}m)$$

wherein, $\rho_1 \sim \rho_n$ represent pseudo-ranges of n Beidou positioning satellites, respectively, and $\rho_1 \sim \rho_n$ can be calculated by the tracking loop of receiver 100; $(x_i, y_i, z_i)$ represents the position coordinate of the $i^{th}$ Beidou positioning satellite, wherein $1 \leq i \leq n$. The $(x_i, y_i, z_i)$ can be calculated according to the orbit parameters and the positioning time of the $i^{th}$ Beidou positioning satellite. The orbit parameters can be obtained by demodulating navigation message data D on the I-branch and analyzing and collecting the ICD document of the satellite navigation system after the satellite signals are tracked and locked. The coordinate $(x_i, y_i, z_i)$ may be Earth-centered Earth-fixed (ECEF) coordinate. In the Earth-centered Earth-fixed (ECEF) coordinate system, the Earth's center represents the origin point of the coordinate. Z axis points to Northward along the Earth's rotation axis direction; X axis points to the latitude and longitude position (0, 0); and Y axis points to 90 degree longitude, wherein the X axis, Y axis and Z axis consist of a right-handed coordinate system. In the equations (5-1)-(5-m), $b_u$ represents a displacement of receiver 100 corresponding to the clock bias between receiver 100 and the Beidou satellite navigation system; $(x_u, y_u, z_u)$ represents a position coordinate of receiver 100. There are four unknowns in equations (5-1)-(5-m), i.e., $x_u$, $y_u$, $z_u$ and $b_u$. The four unknowns can be calculated according to the satellite information from at least four Beidou positioning satellites.

If receiver 100 receives not only the GPS satellite signals but also the Beidou satellite signals, receiver 100 can perform positioning in a dual mode, at S17, i.e., receiver 100 can perform positioning according to the GPS satellite signals and the Beidou satellite signals simultaneously at S17. Receiver 100 can calculate the position information according to the equations (2-11)-(2-2n). In such a situation, there are five unknowns, i.e., $x_u$, $y_u$, $z_u$, $b_{u1}$ and $b_{u2}$, so that at least five positioning satellites may be needed to perform the positioning calculation.

It is to be understood that such description is for illustrative purpose only and does not intend to limit the scope of the present teaching. It is to be understood that, detection module 10 can further detect if the received satellite signals are Galileo satellite signals, GLONASS satellite signals, or any other satellite navigation system available presently or in the future. It is also to be understood that the order for detecting the satellite signals from different satellite navigation systems can be randomly selected and may not be limited to the disclosed order in the above example.

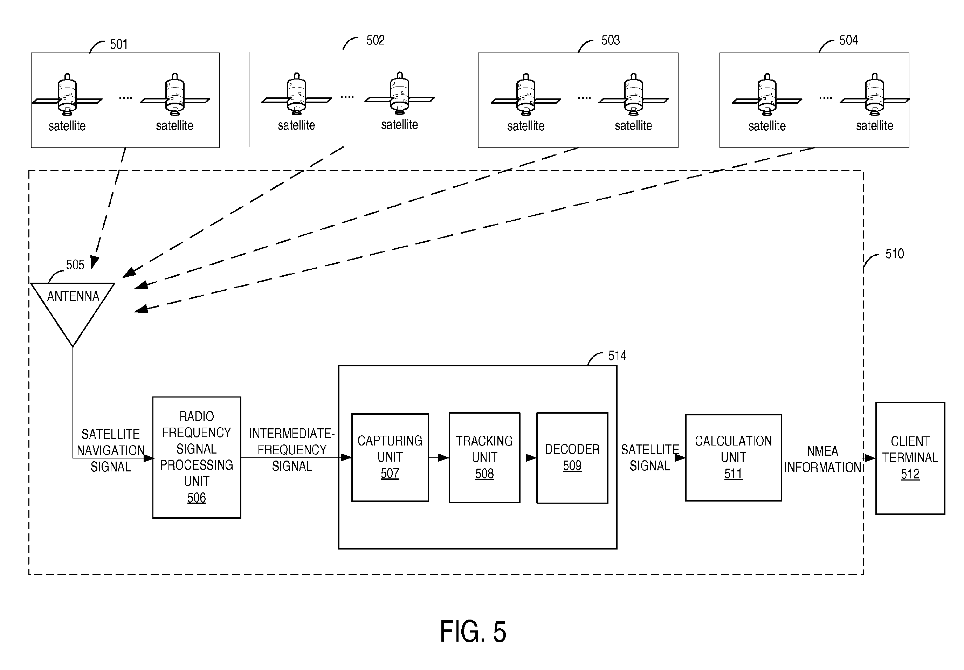

FIG.5 is a block diagram of a multi-mode navigation system for multiple navigation systems, in accordance with one embodiment of the present teaching. FIG. 5 may be described in combination with FIG. 4.

In one embodiment, the multi-mode navigation system is for multiple satellite navigation systems, e.g., a satellite navigation system 501, a satellite navigation system 502, a satellite navigation system 503, and a satellite navigation system 504, and includes a receiver 510 and a client terminal 512. Satellite navigation systems 501, 502, 503, and 504 may be respectively corresponding to Beidou satellite system, GPS satellite system, GLONASS satellite system and Galileo satellite system. It is to be noted that the satellite navigation systems can be other satellite navigation systems, and not limited to above-mentioned satellite navigation systems. In one embodiment, receiver 510 further includes an antenna 505, a Radio Frequency signal processing unit 506, a base band unit 514, and a calculation unit 511. In one embodiment, antenna 505 is configured to receive at least one satellite navigation signals. For example, antenna 505 receives at least one satellite navigation signal from at least one of the Beidou satellite system, GPS satellite system, GLONASS satellite system and Galileo satellite system.

Radio Frequency signal processing unit 506 processes the satellite navigation signals received by antenna 505 and generates an intermediate-frequency signal accordingly. In one embodiment, the satellite navigation signals received by antenna 505 are analog signals with high frequency, thus Radio Frequency signal processing unit 506 processes these high frequency signals with some steps, such as filtering, frequency processing (i.e., frequency shifting), analog-to-digital conversion and so on, and generates intermediate-frequency signals correspondingly which can be handled by base band unit 514. Then Radio Frequency signal processing unit 506 transfers these intermediate-frequency signals to base band unit 514.

Base band unit 514 further includes a capturing unit 507, a tracking unit 508, and a decoder 509. In one embodiment, base band unit 514 receives the intermediate-frequency signals indicating the received satellite navigation signals, and allocates resources for the positioning satellites from which the satellite navigation signals are transmitted based on visibility, performance, and an environment of the positioning satellites. The allocated resources may include capturing channel and tracking channel which are hardware resources, and CPU system resources which are software resources, etc. Capturing unit 507 and tracking unit 508 capture and track the positioning satellites which are allocated with resources, and generate navigation messages corresponding to these positioning satellites according to the captured and tracked intermediate-frequency signals. Decoder 509 receives the navigation messages and demodulates the navigation messages to obtain the satellite information, i.e., the pseudo-range, position coordinate information, and frequency information, etc.

It is to be noted is that most satellite navigation systems have different frequencies and different modulation modes, thus the format of navigation messages are also different. The receivers are designed with different antennas, Radio Frequency signal processing units and base band units to support correspondingly different navigation systems. In one embodiment, the receivers have different hardware structures on antennas, Radio Frequency signal processing units, and base band units to support different satellite navigation systems, i.e., the Beidou satellite system and the GPS satellite system. In one embodiment, the receivers have the same hardware structures, but execute different software for processing different satellite navigation signals to support different satellite navigation system, i.e., the GLONASS system and GALILEO system.

Calculation unit 511 receives the satellite signals including the satellite information, e.g., the pseudo-range, position coordinate information, velocity information, and frequency information, and the like, and/or any combination thereof, and calculates the position information and velocity information of receiver 510. In one embodiment, calculation unit 511 evaluates the received satellite signals and determines an optimal combination, i.e., selecting navigation systems and satellites among these navigation systems, for calculating the position and velocity. Evaluation of the received satellite signals includes sorting and filtering of the received satellite signals.

Calculation unit 511 calculates the position information and velocity information of receiver 510 and converts the information into the information with a standard format of National Marine Electronics Association (NMEA) code. The NMEA information is further output to client terminal 512, thus, the user can obtain and use the position information and velocity information of receiver 510.

In one embodiment, the position information of receiver 510 can be calculated according to equation (3) and the velocity information of the receiver can be calculated according to equation (4).

In one embodiment, the equations (3) and (4) can be solved by a Least Squares (LS) algorithm. Least-squares algorithm is a simple way to achieve true value of some unknown. Many optimization problems can be expressed in the form of least squares by minimizing energy or maximizing entropy.

In one embodiment, in the multi-mode navigation system, an observation equation for calculating position based on the LS algorithm is given by:

$$Z = HX + v \qquad\qquad (6\text{-}1)$$

wherein X is a state vector to be estimated, Z is an observation vector, H is an observation matrix of the system, and v represents a noise vector of the observation vector. An estimation formula of the state vector X based on the LS algorithm is:

$$\widehat{X} = (H^T H)^{-1} H^T Z \qquad\qquad (6\text{-}2)$$

An estimation formula of the state vector X based on the weighted least squares method is:

$$\widehat{X} = (H^T R^{-1} H)^{-1} H^T R^{-1} Z \qquad\qquad (6\text{-}3)$$

wherein R is a covariance matrix of v, and indicates the noise of each observation value.

In one embodiment, in the multi-mode navigation system, each satellite navigation system has a clock bias with the receiver. Each clock bias corresponds to a different displacement. If the initial value of the receiver's coordinate and the displacement is$(x_{u0}, y_{u0}, z_{u0}, b_{u1_0}, b_{u2_0},..., b_{uM_0})$, wherein M represents the number of positioning satellites. According to the principle of the LS algorithm, the formula (3)'s first-order Taylor series based on this initial value is as the following formula:

$$\Delta\rho = H\Delta x + v \qquad\qquad (7)$$

The formula (7) is the observation equation for calculating the position of the receiver based on LS algorithm. Wherein $\Delta\rho$ represents a bias between the measured pseudo range and the estimated pseudo range; $\Delta x$ includes a bias between the position and the initial position of the receiver and biases between the displacement and the initial displacement; v represents the noise vector of the observation vector; H is a $((N_1 + N_2 + ... + N_M) * (3 + M))$ matrix; $N_i$ represents the number of positioning satellites in $i^{th}$ navigation system. Thus, the state vector and observation vector for position calculation based on LS algorithm are as following:

$$X = [\Delta x_u, \Delta y_u, \Delta z_u, \Delta b_{u1}, \Delta b_{u2}, ..., \Delta b_{uM}]^T \qquad\qquad (7\text{-}1)$$

$$Z = [\Delta\rho_{11}, \Delta\rho_{12}, ..., \Delta\rho_{1N_1}, ... \Delta\rho_{M1}, \Delta\rho_{M2}, ..., \Delta\rho_{MN_M}]^T \qquad\qquad (7\text{-}2)$$

$$H = \begin{bmatrix} \alpha_{1x1} & \alpha_{1y1} & \alpha_{1z1} & 1 & 0 & \dots & 0 \\ \alpha_{1x2} & \alpha_{1y2} & \alpha_{1z2} & 1 & 0 & \dots & 0 \\ \vdots & \vdots & \vdots & \vdots & \vdots & \vdots & \vdots \\ \alpha_{1xN_1} & \alpha_{1yN_1} & \alpha_{1zN_1} & 1 & 0 & \dots & 0 \\ \alpha_{2x1} & \alpha_{2y1} & \alpha_{2z1} & 0 & 1 & \dots & 0 \\ \alpha_{2x2} & \alpha_{2y2} & \alpha_{2z2} & 0 & 1 & \dots & 0 \\ \vdots & \vdots & \vdots & \vdots & \vdots & \vdots & \vdots \\ \alpha_{2xN_2} & \alpha_{2yN_2} & \alpha_{2zN_2} & 0 & 1 & \dots & 0 \\ \vdots & \vdots & \vdots & \vdots & \vdots & \vdots & \vdots \\ \alpha_{Mx1} & \alpha_{My1} & \alpha_{Mz1} & 0 & 0 & \dots & 1 \\ \alpha_{Mx2} & \alpha_{Mx2} & \alpha_{Mx2} & 0 & 0 & \dots & 1 \\ \vdots & \vdots & \vdots & \vdots & \vdots & \vdots & 1 \\ \alpha_{MxN_M} & \alpha_{MyN_M} & \alpha_{MzN_M} & 0 & 0 & \dots & 1 \end{bmatrix} \qquad (7\text{-}3)$$

Wherein $N_1$, $N_2$, ...$N_M$ respectively represent the number of positioning satellites in 1st, 2nd, ...Mth navigation system, respectively. The noise vector is a $(N_1+N_2+...+N_M)*1$ matrix, and each element in this matrix is corresponding to the noise of the observation value in observation vector Z. In matrix H, wherein $\alpha_{ixj} = (\hat{x}_u - x_{ij})/\hat{r}_{ij}$, $\alpha_{iyj} = (\hat{y}_u - y_{ij})/\hat{r}_{ij}$, $\alpha_{izj} = (\hat{z}_u - y_{ij})/\hat{r}_{ij}$, represent parameters of the jth positioning satellite in the ith navigation system, wherein $\hat{x}_u$, $\hat{y}_u$, $\hat{z}_u$ represent the initial coordinate of the receiver in earth-centered earth-fixed (ECEF) coordinate system; $\hat{r}_{ij}$ represents an estimated distance from the jth positioning satellite in the ith navigation system to the receiver. In the first iterative computation, $(\hat{x}_u, \hat{y}_u, \hat{z}_u)$ is equal to an initial coordinate $(x_{u0}, y_{u0}, z_{u0})$. In the subsequent iterative computation, $(\hat{x}_u, \hat{y}_u, \hat{z}_u)$ is equal to the coordinate of the receiver calculated from the last iterative computation.

Based on the above-mentioned observation equation, the estimated value of the state vector X can be obtained based on the LS algorithm/weighted least squares (WLS) algorithm according to the equation (6-2)/ 6-3), and the position information of the receiver can be obtained. This computing model is also applicable to the multi-mode navigation system based on the LS algorithm, WLS algorithm and Recursive least squares (RLS) algorithm. To be mentioned, the state vector X includes the bias between the receiver's position and the initial position of the receiver, thus the position of the receiver can be obtained according to the state vector and the initial position of the receiver.

The above-mentioned position calculation based on LS algorithm is suitable for position calculation based on M satellite navigation systems, $M \geq 1$. For example, if the receiver determines that there is 1 satellite navigation system (e.g., a single satellite navigation system) and N positioning satellites in this satellite navigation system for calculating position, the H is an $N \times 4$ matrix as shown:

$$H = \begin{bmatrix} \alpha_{x1} & \alpha_{y1} & \alpha_{z1} & 1 \\ \alpha_{x2} & \alpha_{y2} & \alpha_{z2} & 1 \\ \vdots & \vdots & \vdots & \vdots \\ \alpha_{xN} & \alpha_{yN} & \alpha_{zN} & 1 \end{bmatrix} \qquad (7\text{-}4)$$

N is the number of the positioning satellites in this navigation system for calculating position. $\alpha_{xj} = (\hat{x}_u - x_j)/\hat{r}_j$, $\alpha_{yj} = (\hat{y}_u - y_j)/\hat{r}_j$, $\alpha_{zj} = (\hat{z}_u - y_j)/\hat{r}_j$; wherein $\hat{x}_u$, $\hat{y}_u$, $\hat{z}_u$ represent the initial coordinate of the receiver in earth-centered earth-fixed (ECEF) coordinate system; $\hat{r}_j$ represents an estimated distance from the jth positioning satellite to the receiver.

Thus, the state vector and observation vector for position calculation are:

$$X = [\Delta x_u, \Delta y_u, \Delta z_u, \Delta b_u]^T \qquad (7\text{-}5)$$

$$Z = [\Delta\rho_1, \Delta\rho_2, \dots, \Delta\rho_N]^T \qquad (7\text{-}6)$$

The estimated value of the state vector X can be obtained based on the LS algorithm/weighted least squares (WLS) algorithm according to the equation (6-2)/(6-3), and the position information of the receiver can be obtained.

Similarly, if there are 2 satellite navigation systems for calculating position in one embodiment, the H is a $(N_1+N_2)*_5$ matrix as shown below.

$$
H = \begin{bmatrix}
\alpha_{1x1} & \alpha_{1y1} & \alpha_{1z1} & 1 & 0 \\
\alpha_{1x2} & \alpha_{1y2} & \alpha_{1z2} & 1 & 0 \\
\vdots & \vdots & \vdots & \vdots & \vdots \\
\alpha_{1xN_1} & \alpha_{1yN_1} & \alpha_{1zN_1} & 1 & 0 \\
\alpha_{2x1} & \alpha_{2y1} & \alpha_{2z1} & 0 & 1 \\
\alpha_{2x2} & \alpha_{2y2} & \alpha_{2z2} & 0 & 1 \\
\vdots & \vdots & \vdots & \vdots & \vdots \\
\alpha_{2xN_2} & \alpha_{2yN_2} & \alpha_{2zN_2} & 0 & 1
\end{bmatrix}
\tag{7-7}
$$

Wherein $N_1$ is the number of positioning satellites in the 1st navigation system for calculating position, and $N_2$ is the number of positioning satellites in the 2nd navigation system for calculating position. Thus, the state vector and observation vector for position calculation are:

$$
X = [\Delta x_u, \Delta y_u, \Delta z_u, \Delta b_{1u}, \Delta b_{2u}]^T
\tag{7-8}
$$

$$
Z = [\Delta\rho_{11}, \Delta\rho_{12}, \dots, \Delta\rho_{1N1}, \Delta\rho_{21}, \Delta\rho_{22}, \dots, \Delta\rho_{2N_2}]^T
\tag{7-9}
$$

The estimated value of the state vector X can be obtained based on the LS algorithm/weighted least squares (WLS) algorithm according to the equation (6-2)/(6-3), and the position information of the receiver can be obtained.

The velocity can be calculated by equation (4).

More specifically, the left side of the equation (4) is represented by $d_{ij}$ as shown in equation (8-1):

$$
d_{ij} = \frac{c(f_{ij} - f_{Tij})}{f_{Tij}} + v_{ij\_x}a_{ij\_x} + v_{ij\_y}a_{ij\_y} + v_{ij\_z}a_{ij\_z}
\tag{8-1}
$$

Because the value of $\dfrac{f_{ij}}{f_{Tij}}$ is very close to 1, the difference between $\dfrac{f_{ij}}{f_{Tij}}$ and 1 may be a few parts per million, the equation (4) can be simplified as following:

$$
d_{ij} = \dot{x}_u\, a_{ij\_x} + \dot{y}_u\, a_{ij\_y} + \dot{z}_u\, a_{ij\_z} - c\dot{t}_u
\tag{8-2}
$$

A set of 4-variable equations are established for the variable $\dot{x}_u$ , $\dot{y}_u$ , $\dot{z}_u$ , $\dot{t}_u$ as following:

$$
d = Hg
\tag{8-3}
$$

wherein,

$$d = \begin{bmatrix} d_1 \\ d_2 \\ \cdots \\ d_T \end{bmatrix}, \quad H = \begin{bmatrix} a_{11\_x} & a_{11\_y} & a_{11\_z} & 1 \\ a_{12\_x} & a_{12\_y} & a_{12\_z} & 1 \\ \cdots & \cdots & \cdots & 1 \\ a_{ij\_x} & a_{ij\_y} & a_{ij\_z} & 1 \end{bmatrix}, \quad g = \begin{bmatrix} \dot{x}_u \\ \dot{y}_u \\ \dot{z}_u \\ -c\dot{t}_u \end{bmatrix} \qquad (8\text{-}4)$$

Wherein, T represents the number of positioning satellites for velocity calculation. Accordingly, the velocity and the time shift can be obtained as following by equation (8-5):

$$g = H^{-1}d \qquad (8\text{-}5)$$

Wherein the $H^{-1}$ represents an inverse matrix of the matrix H.

Thus, the equation (8-3) can be considered as an observation equation for calculating the velocity of the receiver based on LS algorithm, wherein g is a state vector, d is an observation vector. The state vector g includes the velocity information $(\dot{x}_u, \dot{y}_u, \dot{z}_u)$ of the receiver. The state vector g can be calculated according to equation (8-5), thus the velocity of the receiver is obtained.

According to equations (8-3)-(8-5), the receiver needs to get a satellite signal's frequency, a frequency of a carrier signal, a velocity of the positioning satellite, a position coordinate of the positioning satellite, and a position coordinate of the receiver before calculating velocity. The frequency of the carrier signal is known, and other information can be obtained by measuring and position calculation. The unknowns includes $\dot{x}_u$, $\dot{y}_u$, $\dot{z}_u$, $\dot{t}_u$, wherein $\dot{t}_u$ represents the time shift of the receiver's system time, which depends on characteristic of the receiver's system and does not depend on the navigation systems. Thus, in the multi-mode navigation system, the receiver calculates the velocity by increasing the number of the positioning satellites without increasing the number of unknowns, therefore, the accuracy of velocity calculation can be significantly increased.

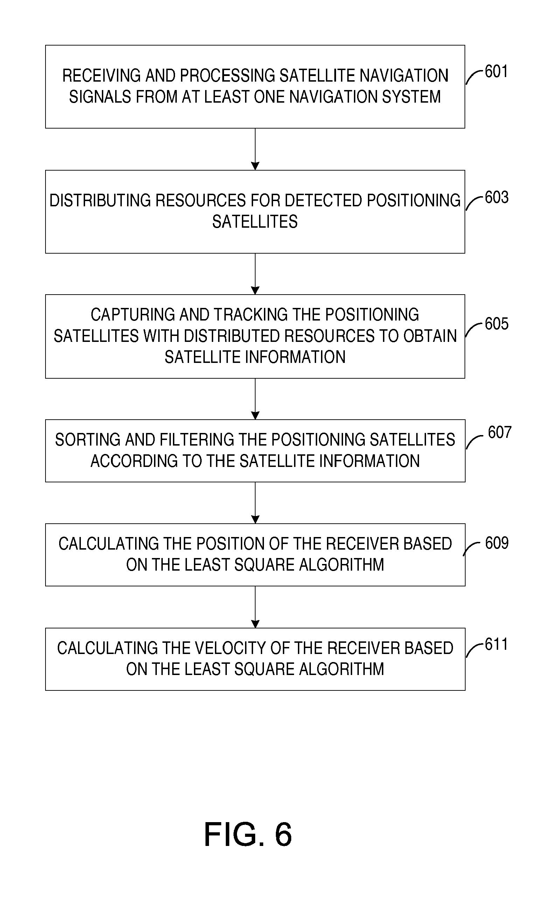

FIG.6 illustrates a process implemented by a calculation unit, e.g., calculation unit 511 in FIG. 5, in accordance with one embodiment of the present teaching. FIG. 6 may be described in combination with FIG. 5.

At step 601, the receiver receives satellite navigation signals from at least one navigation system. The navigation systems include, but are not limited to, BeiDou satellite system, GPS satellite system, GLONASS satellite system, and Galileo satellite system. The receiver further processes these satellite navigation signals with steps, such as filtering, frequency shifting, analog-to-digital conversion and so on.

At step 603, the receiver allocates recourses for the detected positioning satellites. Specifically, the receiver may allocate resources for the positioning satellites based on visibility, performance, and an environment of the positioning satellites. The allocated resources may include capturing channel and tracking channel which are hardware resources, and CPU system resources which are software resources, etc.

At step 605, the receiver captures and tracks the positioning satellites with allocated resources to obtain satellite information, such as pseudo-range, position coordinate, velocity information and frequency information of each positioning satellite, etc.

At step 607, a calculation unit in the multi-mode navigation system, e.g., calculation unit 511 illustrated in FIG. 5, evaluates the positioning satellites according to the received satellite signals, and determines the navigation systems and positioning satellites in these navigation systems for calculating the position and velocity. Evaluation of the received satellite signals includes sorting and filtering of the received satellite signals. Calculation unit 511 sorts the satellites by navigation systems. In one embodiment, calculation unit 511 detects Beidou satellite signals, GPS satellite signals, and Galileo satellite signals according to an I-branch ordinary ranging code of the satellite signals and detects the GLONASS satellite signals according to a frequency of the satellite signals.

Calculation unit 511 filters suitable navigation systems and positioning satellites for calculating position or velocity. The filtering steps include the following steps:

At first step, determining the satellites for calculating position and velocity according to the received satellite signals. The smaller a measuring error is, the smaller the DOP of the satellite allocation is, and thus the higher the accuracy of the position calculation is. Therefore, it is better for the receiver to select the satellites before calculating position. The positioning satellites can be selected based on the satellite signal strength, the satellite elevation, the track quality, and so on.

At second step, determining navigation systems for calculating position and velocity according to the received satellite signals. As described above, if increasing a navigation system for positioning, an unknown is increased when calculating position. Thus, when determining navigation systems, the receiver needs to estimate each navigation system's contribution for positioning, so as to select navigation systems for positioning. The condition for estimating can include the number of the positioning satellites, the satellite elevation, the track quality, the DOP, and so on. In one embodiment, when positioning, both the navigation systems and the positioning satellites are filtered for positioning. When calculating velocity, since the receiver calculates the velocity without increasing the number of unknowns in the multi-mode navigation system, thus satellites for calculating the velocity are filtered as described in the first step.

At step 609, calculation unit 511 calculates the position of the receiver according to the filtered satellites based on the position calculation equation and LS algorithm.

At step 611, calculation unit 511 calculates the velocity of the receiver according the filtered satellites based on the velocity calculation equation and LS algorithm.

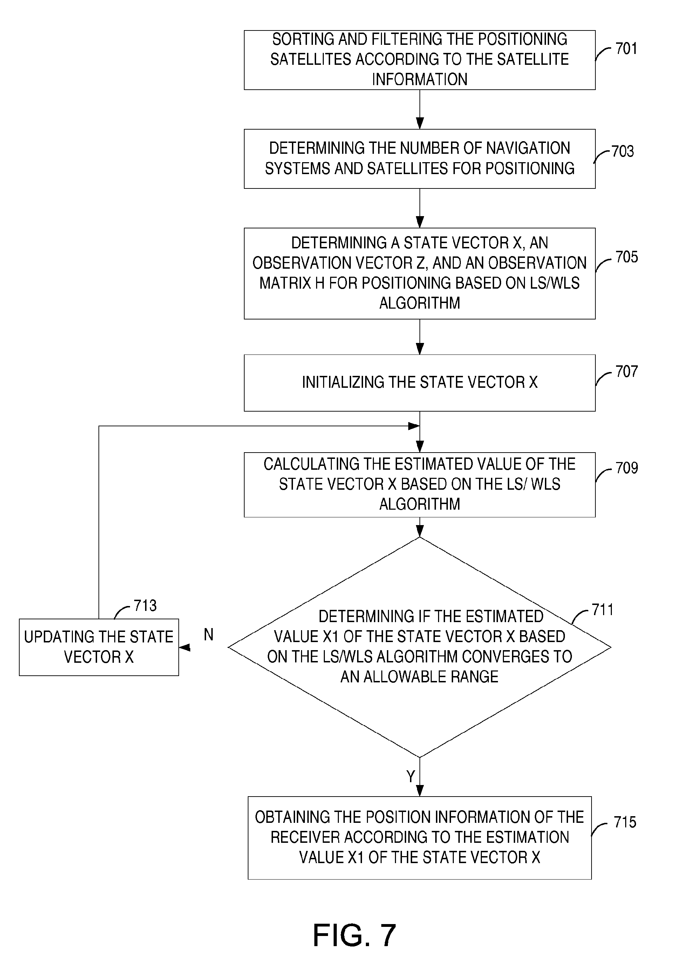

FIG.7 illustrates a method for position calculation based on the least square algorithm, in accordance with one embodiment of the present teaching. FIG. 7 may be described in combination with FIG. 5 and FIG. 6.

At step 701, a calculation unit in the multi-mode navigation system, e.g., calculation unit 511 illustrated in FIG. 5, evaluates the positioning satellites according to the received satellite signals. Evaluation of the received satellite signals includes sorting and filtering of the received satellite signals. Calculation unit 511 sorts the satellites by navigation system according to the received satellite signals. Calculation unit 511 filters the satellites, in order to eliminate redundant satellites with poor quality, and select the suitable navigation systems and satellites in accordance with step 607 in FIG. 6.

At step 703, calculation unit 511 determines the number of navigation systems and the satellites for positioning. In the multi-mode navigation system, if M navigation systems are used for positioning (M is an integer, and greater than 1), there are 3+M unknowns, i.e., $(x_u, y_u, z_u)$ and $b_{u1}, b_{u2}, \dots b_{uM}, b_{uM}$. Wherein $b_{u1}, b_{u2}, \dots b_{uM}, b_{uM}$ respectively represent displacements corresponding to the clock biases between the receiver and M satellite navigation systems. Thus, at least (3+M) positioning satellites should be selected from M navigation systems to calculate the position of the receiver. The receiver needs to estimate each navigation system's contribution for positioning when selecting navigation systems for positioning. The condition for estimating can include the number of satellites, the satellite elevation, the track quality, the DOP, and so on. In each navigation system, the positioning satellites are selected based on the satellite signal strength, the satellite elevation, the track quality and so on.

At step 705, the receiver determines a state vector X, an observation vector z, and an observation matrix H for positioning based on LS/WLS algorithm. In one embodiment, the state vector X, the observation vector Z, and the observation matrix H can be determined according to equations (7)-(7-9). For example, if M navigation systems are used for positioning, the state vector X is as indicated in equation (7-1), and the observation vector Z is as indicated in equation (7-2), and the observation matrix H is as indicated in equation (7-3) and is a $((N_1+N_2+...+N_M)*(3+M))$ matrix. Wherein $N_i$ represents the number of positioning satellites in the ith navigation system.

At step 707, the receiver initializes the state vector X. In one embodiment, the initial value of the receiver's coordinate and displacements corresponding to clock biases is $(x_{u0}, y_{u0}, z_{u0}, b_{u1_0}, b_{u2_0},...,b_{uM_0})$, and the initial value can be set as any value.

At step 709, the receiver calculates the estimated value of the state vector X based on the LS/ WLS algorithm according to the equations (6-2) and (6-3). It is understood that the calculating algorithm is not limited to LS algorithm and WLS algorithm. For example, the RLS algorithm as described above can be used for position calculation.

At step 711, the receiver determines whether the estimated value of the state vector X based on the LS/WLS algorithm converges to an allowable range. In one embodiment, the following equation can be used to determine whether an estimated value X1 of the state vector X converges to an allowable range:

$$|X1| = |\Delta x_u| + |\Delta y_u| + |\Delta z_u| + |b_{u1}| + |b_{u2}|, \dots , |b_{uM}| < V_{TH} \quad (9)$$

The value of $V_{TH}$ needs to be considered in design. In one embodiment, $V_{TH}$ is set as 1 meter. In one embodiment, if the estimated value X1 of the state vector X doesn't converge to the allowable range, the process goes to step 713; otherwise, the process goes to step 715. At step 715, the position information of the receiver can be obtained according to the estimation value X1 of the state vector X.

At step 713, the receiver updates the state vector X. For example, the value of state vector X is updated as the estimated value X1 calculated in the prior iterative computation. Then the process goes back to step 709, and the sate vector X has a new initial value X1. Then, the receiver estimates the value of the state vector X again based on the LS/ WLS algorithm according to the equations (6-2) and (6-3).

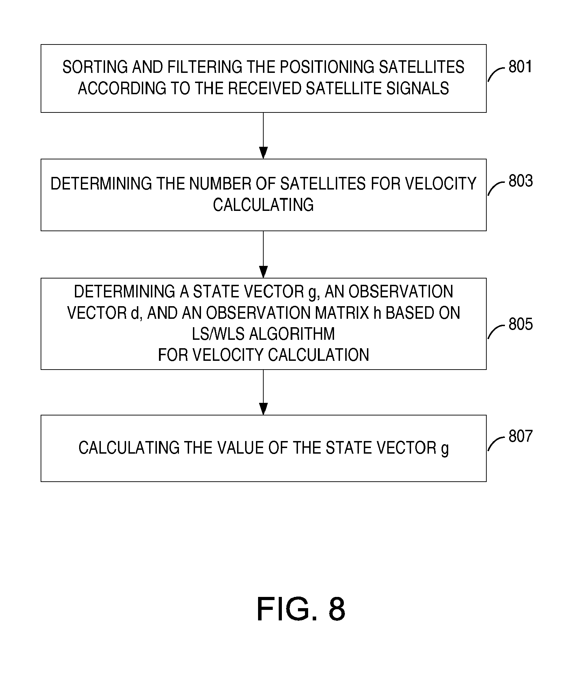

FIG.8 illustrates a method for velocity calculation based on least square algorithm, in accordance with one embodiment of the present teaching. FIG. 7 may be described in combination with FIG. 5-FIG. 7.

At step 801, a calculation unit in the multi-mode navigation system, e.g., calculation unit 511 illustrated in FIG. 5, evaluates the satellites according to the received satellite signals. Evaluation of the received satellite signals includes sorting and filtering of the received satellite signals. Calculation unit 511 sorts and filters the satellites for velocity calculation according to the received satellite signals. The step 801 is similarly implemented as step 607 and step 701.

At step 803, calculation unit 511 determines the number of satellite for velocity calculation. Since calculation unit 511 calculates the velocity without increasing the number of unknowns when the number of navigation systems is increased, at this step, the calculation unit may select the satellites for velocity calculation and determine the number of satellite for velocity calculating.

At step 805, calculation unit 511 determines a state vector g, an observation vector d, and an observation matrix H based on LS/WLS algorithm for velocity calculation according to the equations (8-1) and (8-4) and the satellite information of the selected satellites.

At step 807, calculation unit 511 calculates the value of the state vector g according to the observation vector d, the observation matrix H and equation (8-5), and obtains the velocity information of the receiver according to the state vector g.

Aspects of the method for navigation, as outlined above, may be embodied in programming. Program aspects of the technology may be thought of as "products" or "articles of manufacture" typically in the form of executable code and/or associated data that is carried on or embodied in a type of machine readable medium. Tangible non-transitory "storage" type media include any or all of the memory or other storage for the computers, processors or the like, or associated modules thereof, such as various semiconductor memories, tape drives, disk drives and the like, which may provide storage at any time for the software programming.

All or portions of the software may at times be communicated through a network such as the Internet or various other telecommunication networks. Such communications, for example, may enable loading of the software from one computer or processor into another. Thus, another type of media that may bear the software elements includes optical, electrical, and electromagnetic waves, such as used across physical interfaces between local devices, through wired and optical landline networks and over various air-links. The physical elements that carry such waves, such as wired or wireless links, optical links or the like, also may be considered as media bearing the software. As used herein, unless restricted to tangible "storage" media, terms such as computer or machine "readable medium" refer to any medium that participates in providing instructions to a processor for execution.

Hence, a machine readable medium may take many forms, including but not limited to, a tangible storage medium, a carrier wave medium or physical transmission medium. Non-volatile storage media include, for example, optical or magnetic disks, such as any of the storage devices in any computer(s) or the like, which may be used to implement the system or any of its components as shown in the drawings. Volatile storage media include dynamic memory, such as a main memory of such a computer platform. Tangible transmission media include coaxial cables; copper wire and fiber optics, including the wires that form a bus within a computer system. Carrier-wave transmission media can take the form of electric or electromagnetic signals, or acoustic or light waves such as those generated during radio frequency (RF) and infrared (IR) data communications. Common forms of computer-readable media therefore include for example: a floppy disk, a flexible disk, hard disk, magnetic tape, any other magnetic medium, a CD-ROM, DVD or DVD-ROM, any other optical medium, punch cards paper tape, any other physical storage medium with patterns of holes, a RAM, a PROM and EPROM, a FLASH-EPROM, any other memory chip or cartridge, a carrier wave transporting data or instructions, cables or links transporting such a carrier wave, or any other medium from which a computer can read programming code and/or data. Many of these forms of computer readable media may be involved in carrying one or more sequences of one or more instructions to a processor for execution.

While the foregoing description and drawings represent embodiments of the present invention, it will be understood that various additions, modifications and substitutions may be made therein without departing from the spirit and scope of the principles of the present invention as defined in the accompanying claims. One skilled in the art will appreciate that the invention may be used with many modifications of form, structure, arrangement, proportions, materials, elements, and components and otherwise, used in the practice of the invention, which are particularly adapted to specific environments and operative requirements without departing from the principles of the present invention. The presently disclosed embodiments are therefore to be considered in all respects as illustrative and not restrictive, the scope of the invention being indicated by the appended claims and their legal equivalents, and not limited to the foregoing description.

**Claims**

1. A receiver, comprising:

   a base band unit, configured for allocating resources to positioning satellites of each of one or more navigation systems, and tracking the positioning satellites with the allocated resources to obtain satellite information associated with the positioning satellites; and
a calculation unit, configured for receiving the satellite information from the base band unit, evaluating the positioning satellites in each in the one or more navigation systems, and determining a positioning parameter of the receiver based on the satellite information.

2. The receiver of claim 1, wherein the satellite information comprises one or more of pseudo-ranges, position coordinates, velocity information, and frequency information of the positioning satellites.

3. The receiver of claim 1 or 2, wherein determining the positioning parameter of the receiver comprises calculating a position and a velocity of the receiver based on the satellite information according to a least square algorithm.

4. The receiver of claim 1, 2 or 3 further comprising:

   an antenna, configured for receiving satellite navigation signals of satellites from the one or more navigation systems; and
   a signal processing unit, configured for processing the satellite navigation signals and generating intermediate-frequency signals.

5. The receiver of one of claims 1 - 4, wherein the calculation unit determines Beidou satellites, GPS satellites, and Galileo satellites according to an I-branch ordinary ranging code of received satellite signals from the positioning satellites, and determines GLONASS satellites according to a frequency of the received satellite signals.

6. The receiver of one of claims 1 - 5, wherein the calculation unit is further configured to filter the positioning satellites according to the satellite information, eliminate redundant satellites with poor signal quality, and select suitable satellites for calculating the position.

7. The receiver of claim 3, wherein calculating the position based on the least square algorithm is according to an observation equation:

$$Z = HX + v$$

wherein X is a state vector; Z is an observation vector; H is an observation matrix system; and v represents a noise vector of the observation vector, and wherein the state vector X is calculated according to the observation equation to obtain the position of the receiver.

8. The receiver of claim 7, wherein the state vector and the observation vector for calculating the position based on the least square algorithm are:

$$X = [\Delta x_u, \Delta y_u, \Delta z_u, \Delta b_{u1}, \Delta b_{u2}, \dots, \Delta b_{uM}]^T$$

$$Z = [\Delta\rho_{11}, \Delta\rho_{12}, \dots, \Delta\rho_{1N_1}, \dots \Delta\rho_{M1}, \Delta\rho_{M2}, \dots, \Delta\rho_{MN_M}]^T$$

respectively, wherein $\Delta b_{ui}$ represents a bias between a displacement corresponding to a clock bias between the receiver and an $i^{th}$ satellite navigation system and an initial displacement, $\Delta\rho_{ij}$ represents a bias between a measured pseudo range of a $j^{th}$ satellite in the $i^{th}$ navigation system and an estimated pseudo range, M represents a number of navigation systems used for calculating the position, $N_i$ represents a number of satellites in the $i^{th}$ navigation system used for calculating the position, ($\Delta x$, $\Delta y_u$, $\Delta z_u$) represents a bias between a position coordinate of the receiver and an initial position coordinate.

9. The receiver of claim 7 or 8, wherein the observation matrix H is a $((N_1+N_2+\dots N_M)*(3+M))$matrix:

$$H = \begin{bmatrix} \alpha_{1x1} & \alpha_{1y1} & \alpha_{1z1} & 1 & 0 & ... & 0 \\ \alpha_{1x2} & \alpha_{1y2} & \alpha_{1z2} & 1 & 0 & ... & 0 \\ \vdots & \vdots & \vdots & \vdots & \vdots & \vdots & \vdots \\ \alpha_{1xN_1} & \alpha_{1yN_1} & \alpha_{1zN_1} & 1 & 0 & ... & 0 \\ \alpha_{2x1} & \alpha_{2y1} & \alpha_{2z1} & 0 & 1 & ... & 0 \\ \alpha_{2x2} & \alpha_{2y2} & \alpha_{2z2} & 0 & 1 & ... & 0 \\ \vdots & \vdots & \vdots & \vdots & \vdots & \vdots & \vdots \\ \alpha_{2xN_2} & \alpha_{2yN_2} & \alpha_{2zN_2} & 0 & 1 & ... & 0 \\ \vdots & \vdots & \vdots & \vdots & \vdots & \vdots & \vdots \\ \alpha_{Mx1} & \alpha_{My1} & \alpha_{Mz1} & 0 & 0 & ... & 1 \\ \alpha_{Mx2} & \alpha_{Mx2} & \alpha_{Mx2} & 0 & 0 & ... & 1 \\ \vdots & \vdots & \vdots & \vdots & \vdots & \vdots & 1 \\ \alpha_{MxN_M} & \alpha_{MyN_M} & \alpha_{MzN_M} & 0 & 0 & ... & 1 \end{bmatrix}$$

wherein $\alpha_{ixj} = (\hat{x}_u - x_{ij})/\hat{r}_{ij}$, $\alpha_{iyj} = (\hat{y}_u - y_{ij})/\hat{r}_{ij}$, $\alpha_{izj} = (\hat{z}_u - y_{ij})/\hat{r}_{ij}$, represent parameters of $j^{th}$ satellite in $i^{th}$ navigation system, wherein $(\hat{x}_u, \hat{y}_u, \hat{z}_u)$ represents an initial coordinate of the receiver in earth-centered earth-fixed (ECEF) coordinate system, and wherein $\hat{r}_{ij}$ represents an estimated distance between the $j^{th}$ satellite in the $i^{th}$ navigation system and the receiver.

**10.** The receiver of claim 7, 8 or 9, wherein an estimation formula of the state vector X based on the least square algorithm for calculating the position is:

$$\widehat{X} = (H^T H)^{-1} H^T Z$$

**11.** The receiver of claim 7, 8 or 9, wherein an estimation formula of the state vector X based on a weighted least square algorithm for position calculating is:

$$\widehat{X} = (H^T R^{-1} H)^{-1} H^T R^{-1} Z$$

wherein R is a covariance matrix of v, and indicates a noise of each observation value.

**12.** The receiver of claim 10, wherein the calculation unit determines whether an estimated value X1 of the state vector X based on the least square algorithm converges to an allowable range, wherein if the estimated value X1 does not converge to the allowable range, the calculation unit updates a value of state vector X as a prior estimated value, and estimates the value of the state vector X again, and wherein if the estimated value X1 converges to the allowable range, the calculation unit obtains the positioning parameter of the receiver according to the estimated value X1.

**13.** The receiver of claim 11, wherein the calculation unit determines whether an estimated value X1 of the state vector X based on the weighted least square algorithm converges to an allowable range, wherein if the estimated value X1 doesn't converge to the allowable range, the calculation unit updates a value of state vector X as a prior estimated value X1, and estimates the value of the state vector X again, and wherein if the estimated value X1 converges to the allowable range, the calculation unit obtains the positioning parameter of the receiver according to the estimated value X1.

**14.** The receiver of claim 3, wherein an observation equation for calculating the velocity of the receiver is:

$$d = Hg$$

wherein g is a state vector, d is a observation vector, H is an observation matrix, and wherein the state vector g can be calculated according to the observation equation to obtain the velocity of the receiver.

**15.** The receiver of claim 14, wherein the observation vector d, the observation matrix H, and the state vector g are:

$$d = \begin{bmatrix} d_1 \\ d_2 \\ \cdots \\ d_T \end{bmatrix}, \quad H = \begin{bmatrix} a_{11\_x} & a_{11\_y} & a_{11\_z} & 1 \\ a_{12\_x} & a_{12\_y} & a_{12\_z} & 1 \\ \cdots & \cdots & \cdots & 1 \\ a_{ij\_x} & a_{ij\_y} & a_{ij\_z} & 1 \end{bmatrix}, \quad g = \begin{bmatrix} \dot{x}_u \\ \dot{y}_u \\ \dot{z}_u \\ -c\,\dot{t}_u \end{bmatrix}$$

wherein $d_{ij} = v_{ij\_x}a_{ij\_x} + v_{ij\_y}a_{ij\_y} + v_{ij\_z}a_{ij\_z}$, and wherein T represents a number of satellites used for calculating the velocity, i represents an $i^{th}$ satellite navigation system, j represents $j^{th}$ positioning satellite in the $i^{th}$ satellite navigation system, c represents velocity of light, $(v_{ij\_x}, v_{ij\_y}, v_{ij\_z})$ represents a velocity vector of the $j^{th}$ positioning satellite in the $i^{th}$ satellite navigation system, $(\dot{x}_u, \dot{y}_u, \dot{z}_u)$ represents a velocity information of the receiver; $\dot{t}_u$ represents a timing variation rate of a clock in the receiver, $(a_{ij\_x}, a_{ij\_y}, a_{ij\_z})$ represents a direction vector of the $j^{th}$ positioning satellite in the $i^{th}$ satellite navigation system relative to the receiver, wherein $a_{ij\_x}=(x_{ij}-x_u)/r$, $a_{ij\_y}=(y_{ij}-y_u)/r$, $a_{ij\_z}=(z_{ij}-z_u)/r$, r represents a distance from the receiver to the $j^{th}$ positioning satellite in the $i^{th}$ satellite navigation system, wherein $(x_{ij}, y_{ij}, z_{ij})$ represents a position coordinate of the $j^{th}$ positioning satellite in the $i^{th}$ satellite navigation system, and wherein $(x_u, y_u, z_u)$ represents a position coordinate of the receiver.

**16.** A method for navigation, the method comprising:

receiving and processing satellite navigation signals from at least one navigation system;
allocating resources for detected positioning satellites;
tracking the positioning satellites with allocated resources to obtain satellite information;
evaluating the positioning satellites according to the satellite information;
determining a positioning parameter of the receiver based on the evaluation of the positioning satellites.

**17.** The method of claim 16, wherein the satellite information comprises one or more of pseudo-ranges, position coordinates, velocity information, and frequency information of the positioning satellites.

**18.** The method of claim 17, wherein sorting the positioning satellites by navigation systems according the satellites information further comprises:

determining Beidou satellites, GPS satellites, and Galileo satellites according to an I-branch ordinary ranging code of the satellite information; and
determining GLONASS satellites according to a frequency of the satellite information.

**19.** The method of claim 16, wherein evaluating the positioning satellites comprises:

sorting the positioning satellites by navigation systems according the satellites information; and
filtering the positioning satellites according to the satellite information by eliminating redundant satellites with poor signal quality, and selecting suitable positioning satellites for calculating the position.

100

FIG. 1

S10

RECEIVE ONE OR MORE SIGNALS DIRECTED TO NAVIGATION

S20

DETERMINE ONE OR MORE NAVIGATION SYSTEMS FROM WHERE THE ONE OR MORE SIGNALS ARE SENT

S30

OBTAIN NAVIGATION INFORMATION ASSOCIATED WITH THE DETERMINED ONE OR MORE NAVIGATION SYSTEMS BASED ON THE ONE OR MORE SIGNALS

FIG. 2

S171

DISTRIBUTE RESOURCES FOR THE DETECTED POSITIONING SATELLITES

S172

CAPTURE AND TRACK THE POSITIONING SATELLITES WITH DISTRIBUTED RESOURCES TO OBTAIN SATELLITE INFORMATION

S174

CALCULATE POSITION INFORMATION, VELOCITY INFORMATION, AND A DISPLACEMENT OF THE RECEIVER CORRESPONDING TO EACH CLOCK BIAS BETWEEN THE RECEIVER AND EACH SATELLITE NAVIGATION SYSTEM ACCORDING TO THE RECEIVED SATELLITE INFORMATION

FIG. 3

EP 2 813 864 A2

```
                                                                                    S14
              S11                              S13                                ┌──────────┐
        ╱╲                              ╱╲                                        │    NO    │
      ╱    ╲    NO                    ╱    ╲    NO                                 │POSITIONING,│
    ╱ RECEIVE ╲──────────────────▶ ╱ RECEIVE  ╲────────────────▶                  │ CONTINUE │
    ╲  GPS    ╱                    ╲  BEIDOU   ╱                                   │DETECTING │
      ╲SATELLITE╱                    ╲SATELLITE╱                                   └──────────┘
        ╲SIGNALS╱                      ╲SIGNALS╱
          ╲╱                             ╲╱
          │YES                           │YES
          ▼                              ▼
        S12                            S16
        ╱╲                    S15    ┌──────────────┐
      ╱    ╲               ┌──────────┐│POSITION BASED│
    ╱ RECEIVE ╲    NO      │POSITION  ││   ON BEIDOU  │
    ╲ BEIDOU  ╱──────────▶ │BASED ON  ││SATELLITE     │
      ╲SATELLITE╱          │GPS       ││  SIGNALS     │
        ╲SIGNALS╱          │SATELLITE ││              │
          ╲╱               │SIGNALS   │└──────────────┘
          │YES             └──────────┘
          ▼
    ┌──────────────────┐  S17
    │POSITION BASED ON GPS│
    │SATELLITE SIGNALS AND│
    │BEIDOU SATELLITE SIGNALS│
    └──────────────────┘
```

# FIG. 4

FIG. 5

| | |
|---|---|
| RECEIVING AND PROCESSING SATELLITE NAVIGATION SIGNALS FROM AT LEAST ONE NAVIGATION SYSTEM | 601 |

DISTRIBUTING RESOURCES FOR DETECTED POSITIONING SATELLITES — 603

CAPTURING AND TRACKING THE POSITIONING SATELLITES WITH DISTRIBUTED RESOURCES TO OBTAIN SATELLITE INFORMATION — 605

SORTING AND FILTERING THE POSITIONING SATELLITES ACCORDING TO THE SATELLITE INFORMATION — 607

CALCULATING THE POSITION OF THE RECEIVER BASED ON THE LEAST SQUARE ALGORITHM — 609

CALCULATING THE VELOCITY OF THE RECEIVER BASED ON THE LEAST SQUARE ALGORITHM — 611

# FIG. 6

SORTING AND FILTERING THE POSITIONING SATELLITES ACCORDING TO THE SATELLITE INFORMATION ⟋ 701

DETERMINING THE NUMBER OF NAVIGATION SYSTEMS AND SATELLITES FOR POSITIONING ⟋ 703

DETERMINING A STATE VECTOR X, AN OBSERVATION VECTOR Z, AND AN OBSERVATION MATRIX H FOR POSITIONING BASED ON LS/WLS ALGORITHM ⟋ 705

INITIALIZING THE STATE VECTOR X ⟋ 707

CALCULATING THE ESTIMATED VALUE OF THE STATE VECTOR X BASED ON THE LS/ WLS ALGORITHM ⟋ 709

UPDATING THE STATE VECTOR X ⟋ 713

N

DETERMINING IF THE ESTIMATED VALUE X1 OF THE STATE VECTOR X BASED ON THE LS/WLS ALGORITHM CONVERGES TO AN ALLOWABLE RANGE ⟋ 711

Y

OBTAINING THE POSITION INFORMATION OF THE RECEIVER ACCORDING TO THE ESTIMATION VALUE X1 OF THE STATE VECTOR X ⟋ 715

FIG. 7

```
┌─────────────────────────────────────────────────┐
│ SORTING AND FILTERING THE POSITIONING SATELLITES │──801
│   ACCORDING TO THE RECEIVED SATELLITE SIGNALS    │
└─────────────────────────────────────────────────┘
                         │
                         ▼
┌─────────────────────────────────────────────────┐
│ DETERMINING THE NUMBER OF SATELLITES FOR VELOCITY │──803
│                   CALCULATING                     │
└─────────────────────────────────────────────────┘
                         │
                         ▼
┌─────────────────────────────────────────────────┐
│   DETERMINING A STATE VECTOR g, AN OBSERVATION    │
│   VECTOR d, AND AN OBSERVATION MATRIX h BASED ON  │──805
│                  LS/WLS ALGORITHM                 │
│              FOR VELOCITY CALCULATION             │
└─────────────────────────────────────────────────┘
                         │
                         ▼
┌─────────────────────────────────────────────────┐
│    CALCULATING THE VALUE OF THE STATE VECTOR g    │──807
└─────────────────────────────────────────────────┘
```

FIG. 8

**EP 2 813 864 A2**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 201310199019 A